# EUROPÄISCHE PATENTANMELDUNG

(11) **EP 1 801 476 A2**
(43) Veröffentlichungstag der Anmeldung: **27.06.2007**
(21) Anmeldenummer: 06126513.8
(22) Anmeldetag: 19.12.2006
(51) Int. Cl.: F16K 27/00

(54) **Pneumatik-Wegeventilanschlussplatte mit variabler Lager der Arbeitsanschlüsse**

(30) Priorität: 21.12.2005 DE 102005061205
(71) Anmelder: Bosch Rexroth AG, 71701 Schwieberdingen (DE)
(72) Erfinder: Ghimpu-Mundinger, Radu, 17229, Leonberg (DE)
(74) Vertreter: Kietzmann, Lutz

(57) **Zusammenfassung**

Ventilanschlussplatte (1) zur Aufnahme zumindest eines Ventils zum Schalten eines Druckmittelflusses, insbesondere eines elektropneumatischen Mehrwegeventils über eine Ventilaufsatzfläche (2), welche zur mehrfachen planparallelen Anordnung zueinander ausgebildet ist und fluidische und /oder elektrische Versorgungsöffnungen (3) aufweist, welche bei einer parallel benachbarten Anordnung durchgehende Kanäle bilden, wobei weiterhin Arbeitsanschlüsse (4, 4a, 4b, 4c) zur Ansteuerung von fluidischen Verbrauchern vorgesehen sind, wobei die Ventilanschlussplatte (1) ein Anschlusselement (5) umfasst, in dem die Arbeitsanschlüsse (4, 4a, 4b, 4c) ausgebildet sind, und das Anschlusselement (5) an der Ventilanschlussplatte (1) in zumindest zwei Positionen montierbar ist, um sowohl eine bodenseitige Anschlussrichtung als auch eine seitliche Anschlussrichtung der Arbeitsanschlüsse (4, 4a, 4b, 4c) zu ermöglichen. Damit wird eine Ventilanschlussplatte (1) geschaffen, bei der die Lage der Arbeitsanschlüsse (4, 4a, 4b, 4c) an der Ventilanschlussplatte (1) durch einfache Montagevarianten veränderbar ist.

## Beschreibung

Die vorliegende Erfindung betrifft eine Ventilanschlussplatte zur Aufnahme zumindest eines Ventils zum Schalten eines Druckmittelflusses, insbesondere eines elektropneumatischen Mehrwegeventils über eine Ventilaufsatzfläche, welche zur mehrfachen planparallelen Anordnung zueinander ausgebildet ist und fluidische und/ oder elektrische Versorgungsöffnungen aufweist, welche bei einer parallel benachbarten Anordnung durchgehende Kanäle bilden, wobei weiterhin Arbeitsanschlüsse zur Ansteuerung von fluidischen Verbrauchern vorgesehen sind. Insbesondere betrifft die vorliegende Erfindung die Anordnung der Arbeitsanschlüsse an der Ventilanschlussplatte.

Ventilanschlussplatten sind zur Aufnahme von Ventilen allgemein bekannt, wobei die Ventilanschlussplatten parallel zueinander angeordnet werden, um insgesamt einen Ventilgrundkörper zu bilden. Entsprechend der Anzahl der im Ventilsystem integrierten Ventile ist der Ventilgrundkörper aus einer Mehrzahl von benachbart angeordneten Ventilanschlussplatten ausgebildet, wobei die Ventilanschlussplatten als Querkanäle ausgebildete Versorgungsöffnungen aufweisen, welche bei einer parallelen Anordnung der Ventilanschlussplatten durchgehende Kanäle bilden, durch die die Druckmittelversorgung der einzelnen Ventile erfolgt. Ebenso ist eine elektrische Versorgung der Ventile möglich, indem die Versorgungsleitungen wie Signal- und Leistungsanschlüsse durch die innenliegenden Kanäle verlaufen. Die einzelnen Ventilanschlussplatten werden entweder unmittelbar miteinander verschraubt oder mittels längsverlaufenden Zugsankern insgesamt auf Block gezogen und somit zu einer Einheit formschlüssig verbunden. Auf der Oberseite der Ventilanschlussplatten befinden sich Ventilaufsatzflächen, auf die die einzelnen Ventile mittels einer Steck- oder Schraubverbindung aufgesetzt und befestigt werden. Über einzelne in den Ventilaufsatzflächen ausgebildete Anschlussöffnungen erfolgt die jeweilige elektrische und fluidische Versorgung des Ventils.

Eine derartige Ventilanschlussplatte ist aus der DE 101 59 182 A1 bekannt. Die Ventilanschlussplatte ist als einzelnes Segment ausgebildet, welche bei einer parallelen Anordnung einer Vielzahl von Ventilanschlussplatten einen Ventilgrundkörper bilden. Die Arbeitsanschlüsse der Ventilanschlussplatte sind geometrisch fest im Gehäuse der Ventilanschlussplatte angeordnet, so dass die Anschlussrichtung der Arbeitsanschlüsse zu bzw. von einem Verbraucher am Ventilgrundkörper festgelegt ist. Somit muss die Umgebung der Ventilgrundplatte an die Anordnung der Arbeitsanschlüsse angepasst werden, wodurch das Gesamtsystem unflexibel wird. Ein variabler Versatz der Arbeitsanschlüsse ist nicht möglich, so dass bei einer Montage des aus der Vielzahl der Ventilanschlussplatten gebildeten Ventilgrundkörpers beispielsweise auf einem Trägersystem wie ein Profil oder ähnlichem ein hinreichender Konstruktionsraum für die Arbeitsleitungen vorgesehen sein muss. Darüber hinaus weisen die Ventilanschlussplatten innerhalb eines Ventilgrundkörpers zueinander gleichseitige Anschlussrichtungen der Arbeitsanschlüsse auf, welche entweder seitlich oder bodenseitig angeordnet sind, sodass keine wechselseitige Anordnung der Arbeitsanschlüsse innerhalb eines Blockes von Ventilanschlussplatten möglich ist.

Es ist daher die Aufgabe der vorliegenden Erfindung, eine Ventilanschlussplatte zu schaffen, bei der die Lage der Arbeitsanschlüsse an der Ventilanschlussplatte durch einfache Montagevarianten veränderbar ist.

Diese Aufgabe wird ausgehend von einer Ventilanschlussplatte gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass die Ventilanschlussplatte ein Anschlusselement umfasst, in dem die Arbeitsanschlüsse ausgebildet sind, und das Anschlusselement an der Ventilanschlussplatte in zumindest zwei Positionen montierbar ist, um sowohl eine bodenseitige Anschlussrichtung als auch eine seitliche Anschlussrichtung der Arbeitsanschlüsse zu ermöglichen.

Diese Lösung bietet den Vorteil, dass die Richtung der Arbeitsanschlüsse durch ein einfaches Drehen des Anschlusselements um 180° verändert werden kann. Somit kann die Ventilanschlussplatte sowohl für eine bodenseitige Anschlussrichtung der Arbeitsanschlüsse als auch für eine seitliche Anschlussrichtung der Arbeitsanschlüsse gleich ausgeführt sein, so dass eine Erhöhung der Flexibilität erzielt wird. Ebenso ist der Vorteil gegeben, dass das Anschlusselement für beide Anschlussrichtungen gleich ist, da lediglich eine Drehung von 180° und eine darauffolgende erneute Montage erforderlich ist. Die gleichseitige Form des Anschlusselements beschreibt dabei einen Körper, welcher zumindest zwei gleich ausgebildete Seiten aufweist, so dass die Drehrichtung und die anschließende Montage keine Veränderung der Außenkontur der Ventilanschlussplatte hervorruft. Das Anschlusselement kann dabei eine gleichseitige Dreiecksform aufweisen, wobei die Trennebene zwischen der Ventilanschlussplatte und dem Anschlusselement bezogen auf die Ventilaufsatzfläche einen Winkel von etwa 45° einnimmt. Die erste Seitenfläche und die zweite Seitenfläche des dreieckförmigen Anschlusselements schließen einen Winkel von etwa 90° zueinander ein, wobei die Trennebene zwischen der Ventilanschlussplatte und dem Anschlusselement die Grundkante des Dreiecks bildet. Mit der Seite der Trennebene wird das Anschlusselement an die entsprechende gegenüberliegende Trennebene der Ventilanschlussplatte angesetzt und befestigt. Die Ausbildung des Anschlusselementes kann jedoch auch würfelförmig sein, wobei der Würfel eine gleiche Kantenlänge in zumindest zwei senkrecht zueinander ausgebildeten Richtungen aufweist. Die Anschlusskanäle, welche zwischen der Ventilaufsatzfläche sowie den Arbeitsanschlüssen in dem Anschlusselement verlaufen, sind über zumindest eine innerhalb der Trennebene liegende fluidische Schnittstelle zwischen der Ventilanschlussplatte und dem Anschlusselement miteinander verbunden. Die fluidischen Schnittstellen des Anschlusselements zur Verbindung der Arbeitsanschlüsse sind innerhalb der Trennebenen derart symmetrisch angeordnet, dass eine wechselseitige Montage des Anschlusselements an die Ventilanschlussplatte jeweils passgenau die Fluidkanäle miteinander verbinden. Im montierten Zustand bildet die als Trennebene ausgebildete Grundkante bzw. Grundfläche des dreieckförmigen Anschlusselements die Schnittstelle zwischen dem Anschlusselement und der Ventilanschlussplatte, wohingegen sowohl die erste Seitenfläche als auch die zweite Seitenfläche des Anschlusselements die Außenkontur der Ventilanschlussplatte bilden.

Vorteilhafterweise sind über die Ventilaufsatzfläche zwei Ventile mit je zwei Arbeitsanschlüssen aufnehmbar, so dass das Anschlusselement vier Arbeitsanschlüsse aufweist. Mit dieser Ausführungsform der Ventilanschlussplatte bietet sich die Möglichkeit, zwei Ventile pro Anschlussplatte aufzunehmen, wobei die Ventile vorteilhafterweise parallel verschaltet sind, um eine Erhöhung des Fluiddurchflusses zu erzielen. Zudem lassen sich die Ventile redundant betreiben. Die Ventile können als 3/2-Wegeventile oder 5/2-Wegeventile ausgeführt sein. Damit weist jedes Ventil zumindest zwei Arbeitsanschlüsse aus, welche mit einem Verbraucher, wie einem Hubzylinder oder ähnlichem verbunden sind. Die vier Arbeitsanschlüsse, welche entweder als Steckfixverbindung oder als Gewindeverbindung ausgebildet sein können, sind insgesamt entweder auf einer ersten Seitenfläche des Anschlusselements oder auf einer zweiten Seitenfläche des Anschlusselements angeordnet, welche erfindungsgemäß zueinander gleich sind. Durch eine einfache Drehung des Anschlusselements kann nunmehr die Ausgangsrichtung aller vier Arbeitsanschlüsse entweder seitlich erfolgen oder in Richtung der Bodenfläche aus der Ventilanschlussplatte herausgeführt werden. Eine Aufnahme der Ventilanschlussplatte über die Bodenfläche kann auf einem mechanischen Träger, wie einem Profilelement mittels einer Verschraubung, einer Klemmung oder einer sonstigen mechanischen Verbindung erfolgen, wobei die in Richtung der Bodenfläche zeigende Seitenfläche des Anschlusselements frei ist, um eine Herausführen der Arbeitsanschlüsse zu ermöglichen. Bei einer Anordnung von einer Mehrzahl von Ventilanschlussplatten parallel zueinander zur Bildung einer Ventilgrundplatte können die Anschlusselemente der einzelnen Ventilanschlussplatte unabhängig voneinander entweder in seitlicher Richtung oder in Bodenrichtung montiert sein, so dass die Arbeitsanschlüsse abhängig vom einzelnen Verbraucher aus dem Gesamtsystem der Ventilanschlussplatte herausgeführt und zum Verbraucher geleitet werden.

Eine vorteilhafte Weiterbildung der Erfindung sieht vor, dass je ein Arbeitskanal des ersten und des zweiten auf der Ventilaufsatzfläche aufgesetzten Ventils innerhalb der Ventilanschlussplatte oder innerhalb des Anschlusselements fluidisch zusammengeführt sind, sodass das Anschlusselement insgesamt zwei Arbeitsanschlüsse umfasst. Damit reduziert sich die Anzahl der Arbeitsanschlüsse des Anschlusselements von vier Arbeitsanschlüssen auf zwei Arbeitsanschlüsse. Fluidisch sind die Ventile damit parallel verschaltet, was insbesondere den Vorteil eines erhöhten Durchflusses bietet, wenn die parallel verschalteten Ventile mit einem gleichen Verbraucher fluidisch in Verbindung gebracht sind.

Um eine mechanische Verbindung zwischen dem Anschlusselement und der Ventilanschlussplatte zu schaffen, wird vorgeschlagen, dass das Anschlusselement mittels einer Zentralschraube an der Ventilanschlussplatte montierbar ist oder das Anschlusselement mit einer Ventilanschlussplatte mittels Zylinderstiften verstiftet ist. Zur Verbindung des Anschlusselements mit der Ventilanschlussplatte mittels Zylinderstiften weist die Ventilanschlussplatte zumindest zwei Bohrungen auf, wobei das Anschlusselement Befestigungslaschen umfasst, welche Bohrungen besitzen, die mit der Bohrung in der Ventilanschlussplatte fluchten. Wenn das Anschlusselement an der Ventilanschlussplatte angesetzt wird, können die Zylinderstifte durch die fluchtenden Bohrungen hindurchgeführt werden, um die mechanische Verbindung herzustellen. Die Anschlusslaschen zum Verstiften des Anschlusselements sind außenseitig innerhalb der Trennebene angeordnet, so dass das Anschlusselement an zumindest zwei Befestigungspunkten mit der Ventilanschlussplatte verbunden ist. Hingegen ist die Zentralschraube derart angeordnet, dass der Schraubenkopf in bzw. auf zumindest einer der beiden Seitenflächen angeordnet ist, wobei der Schaft der Zentralschraube durch das Anschlusselement hindurchläuft und mit der Ventilanschlussplatte verschraubt wird. Die Verwendung einer Zentralschraube bietet den Vorteil, dass das Anschlusselement auch dann von der Ventilanschlussplatte gelöst werden kann, wenn eine Vielzahl von Ventilanschlussplatten planparallel zueinander angeordnet sind, um insgesamt einen Ventilgrundkörper zu bilden. Somit kann ohne ein Lösen der Gesamtverbindung der Ventilanschlussplatten zueinander ein Austausch bzw. ein Wechsel der Ausgangsseite der Arbeitsanschlüsse des Anschlusselements vorgenommen werden, da die Zentralschraube von der Seite der ersten bzw. zweiten Seitenfläche gelöst werden kann. Die Zentralschraube kann dabei als Zylinderschraube, als Senkkopfschraube oder einer vergleichbaren Schraubenform ausgeführt sein, wobei der Kopf der Zentralschraube ebenso innerhalb des Anschlusselements versenkt sein kann, so dass dieser nicht aus der ersten bzw. zweiten Seitenfläche herausragt. Darüber hinaus ist die Möglichkeit gegeben, das Anschlusselement mit zumindest zwei oder mehreren Schraubenverbindungen an der Ventilanschlussplatte zu montieren, um eine erhöhte Montagefestigkeit zu erzielen.

Die Zentralschraube kann so angeordnet sein, dass sich diese mittig zwischen den zwei bzw. vier Arbeitsanschlüssen befindet, wobei ebenso die Möglichkeit gegeben ist, dass sich die Zentralschraube auf der freien, die Arbeitsanschlüsse nicht umfassenden Seitenfläche befindet. Ebenso kann vorgesehen sein, dass die Zentralschraube im Bereich der Kante zwischen der ersten und zweiten Seitenfläche mittels einer Vertiefung angeordnet ist und orthogonal zur Trennebene verläuft, um eine senkrechte Anpresskraft des Anschlusselements an die Ventilanschlussplatte über die Trennebene zu realisieren.

Vorteilhafterweise ist die geometrische Abmessung der ersten und zweiten Seitenfläche des Anschlusselements derart ausgebildet, dass die Außenkontur der Ventilanschlussplatte in die Seitenflächen des Anschlusselements eben übergeht. Damit bleibt die rechteckige Grundform der Ventilanschlussplatte bei einem angeschraubten Anschlusselement erhalten, wobei unterseitig die Bodenfläche ohne einen Absatz bzw. einen Sprung in der Körperkante in die zweite Seitenfläche des Anschlusselements übergeht, und in seitlicher Richtung das Anschlusselement mit der oben angeordneten Ventilaufsatzfläche derart abschließt, dass die erste Seitenfläche ebenfalls eine durchgehende Planfläche bildet. Die Breite des Anschlusselements entspricht der Breite der Ventilanschlussplatte, so dass auch diesbezüglich eine Gleichförmigkeit der gesamten Ventilanschlussplatte gewahrt ist.

Aus konstruktiven Gründen ist es von besonderem Vorteil, dass zur fluidischen Dichtung der Trenneben zwischen der Ventilanschlussplatte und dem Anschlusselement zumindest ein Dichtelement angeordnet ist. Das Dichtelement kann dabei als Kontur- oder Formdichtung ausgeführt sein, welches in der Trennebene eingelegt wird, um die einzelnen Fluidkanäle in ihrem Übergang zwischen der Ventilanschlussplatte und dem Anschlusselement abzudichten. Die Dichtwirkung wird durch die feste Montage mittels der Zentralschraube bzw. einer Verstiftung mittels Zylinderstiften gewährleistet, da das Anschlusselement über der Trennebene mit einer Mindestanpresskraft an die Ventilanschlussplatte montiert wird. Die Ventilanschlussplatte und /oder das Anschlusselement können aus einem Kunststoff oder Aluminium hergestellt sein, wobei sich zur Herstellung dieser Bauteile ein Spritzgussverfahren bzw. ein Druckgussverfahren anbietet. Insbesondere ist das Anschlusselement für beide Ausführungsvarianten der seitlichen sowie der bodenseitigen Anordnung der Arbeitsanschlüsse gleich ausgeführt, so dass ein einziges Spritzgusswerkzeug hinreichend ist, da beide Ausführungsvarianten lediglich durch eine unterschiedliche Montagevariante zu realisiert werden.

Weitere, die Erfindung verbessernde Maßnahmen sind in den Unteransprüchen angegeben oder werden nachstehend gemeinsam mit der Beschreibung eines bevorzugten Ausführungsbeispiels der Erfindung anhand der Figuren näher dargestellt. Es zeigt:
- Fig. 1: eine perspektivische Ansicht einer Ventilanschlussplatte sowie eines Anschlusselementes in einer ersten und in einer zweiten Montageposition;
- Fig. 2: eine perspektivische Ansicht einer Ventilanschlussplatte mit einem montierten Anschlusselement, wobei die Arbeitsanschlüsse seitlich herausgeführt sind; und
- Fig. 3: eine perspektivische Ansicht einer Ventilanschlussplatte mit einem montierten Anschlusselement, wobei die Arbeitsanschlüsse bodenseitig herausgeführt sind.

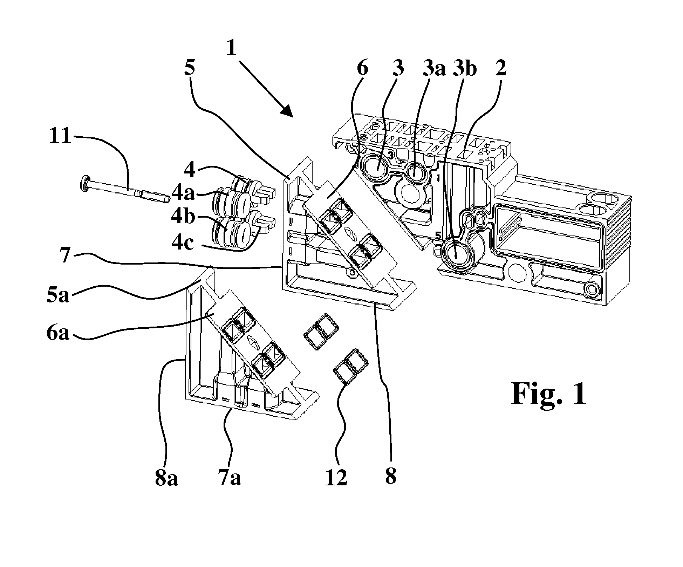

Die in Fig. 1 gezeigte Ventilanschlussplatte 1 weist oberseitig eine Ventilaufsatzfläche 2 auf, welche mechanische, fluidische sowie elektrische Verbindungsstellen umfasst, um zumindest ein Ventil aufzunehmen. Gemäß der Ausführungsvariante der vorliegenden Ventilanschlussplatte 1 besteht die Möglichkeit, zwei Ventile auf der Ventilaufsatzfläche 2 aufzunehmen, wobei die Ventile parallel aufgesteckt werden. Seitlich weist die Ventilanschlussplatte Versorgungsöffnungen 3 auf, durch welche beispielsweise eine Druckmittelversorgung oder eine Entlüftung erfolgen kann. Die Ventilanschlussplatte 1 ist so ausgeführt, dass diese mehrfach parallel benachbart zueinander angeordnet und beispielsweise über Zuganker miteinander verschraubt werden, so dass die Querbohrungen, welche die Versorgungsöffnungen 3 bilden, bei einer Mehrzahl von Ventilanschlussplatten 1 jeweils einen durchgehenden Kanal bilden. Innerhalb der Ventilanschlussplatte 1 sind die Versorgungsöffnungen 3 mit Anschlüssen verbunden, welche in der Ventilaufsatzfläche angeordnet sind, um die Schnittstelle zu dem zumindest einen Ventil zu bilden, welches auf der Ventilaufsatzfläche 2 aufgesetzt ist. Die Versorgungsöffnungen 3 können aufgrund der einfachen Versorgung mit Druckmittel bzw. Entlüftung mit einem jeweiligen Entlüftungskanal, welches am einzelnen Ventil angeordnet ist und in einem gemeinsamen Entlüftungskanal entlüftet, für alle Ventile gemeinsam verwendet werden. Hingegen bilden die Arbeitsanschlüsse 4, 4a, 4b, 4c Einzelanschlüsse, welche unabhängig voneinander von jedem Ventil an einzelne Verbraucher angeschlossen werden. Die Arbeitsanschlüsse 4, 4a, 4b, 4c sind in einem Anschlusselement 5 angeordnet, welche über eine Trennebene 6 an der Ventilanschlussplatte 1 montierbar ist. Die dreieckige Grundform des Anschlusselements 5 bietet die Möglichkeit, dieses mit einem Versatz von 180° in zwei verschiedenen Positionen an die Anschlussplatte 1 zu montieren. Gemäß dem vorliegenden Ausführungsbeispiel weist das Anschlusselement 5 Arbeitsanschlüsse 4, 4a, 4b, 4c auf, welche entweder an einer ersten Seitenfläche 7 angeordnet sind, wohingegen eine zweite Seitenfläche 8 keine Arbeitsanschlüsse 4, 4a, 4b, 4c aufweist. Die dreieckige Grundform des Anschlusselements 5 ist durch eine Gleichseitigkeit gekennzeichnet, wobei die erste und die zweite Seitenfläche 7, 8 geometrisch gleich ausgebildet sind und einen Winkel von etwa 90° zueinander einschließen. Die Grundkante der Dreiecksform ist durch die Trennebene 6 gebildet, welche die fluidische Schnittstelle der Arbeitsanschlüsse 4, 4a, 4b, 4c bildet.

In Fig.1 ist das Anschlusselement 5, 5a zweifach abgebildet, wobei das Anschlusselement 5 eine seitliche Anordnung der Arbeitsanschlüsse 4, 4a, 4b, 4c aufweist, wohingegen das abgebildete Anschlusselement 5a um 180° gedreht ist, so dass die Arbeitsanschlüsse 4, 4a, 4b, 4c bodenseitig angeordnet sind. Damit ist durch eine einfache Montagevariante die Möglichkeit geschaffen, den die Ausgangsrichtung der Arbeitsanschlüsse 4, 4a, 4b, 4c sowohl seitlich als auch bodenseitig aus der Ventilanschlussplatte 1 herauszuführen. Um das Anschlusselement 5 an der Ventilanschlussplatte zu befestigen, ist gemäß dem vorliegenden Ausführungsbeispiel eine Zentralschraube 11 vorgesehen, welche über eine geeignete Bohrung im Anschlusselement 5 bzw. in der Ventilanschlussplatte 1 eine mechanische Verbindung herstellt. Eine Abdichtung des Druckmittels in der Trennebene 6, 6a erfolgt über Dichtelemente 12, welche gemäß des vorliegenden Ausführungsbeispiels als Formdichtungen ausgeführt sind.

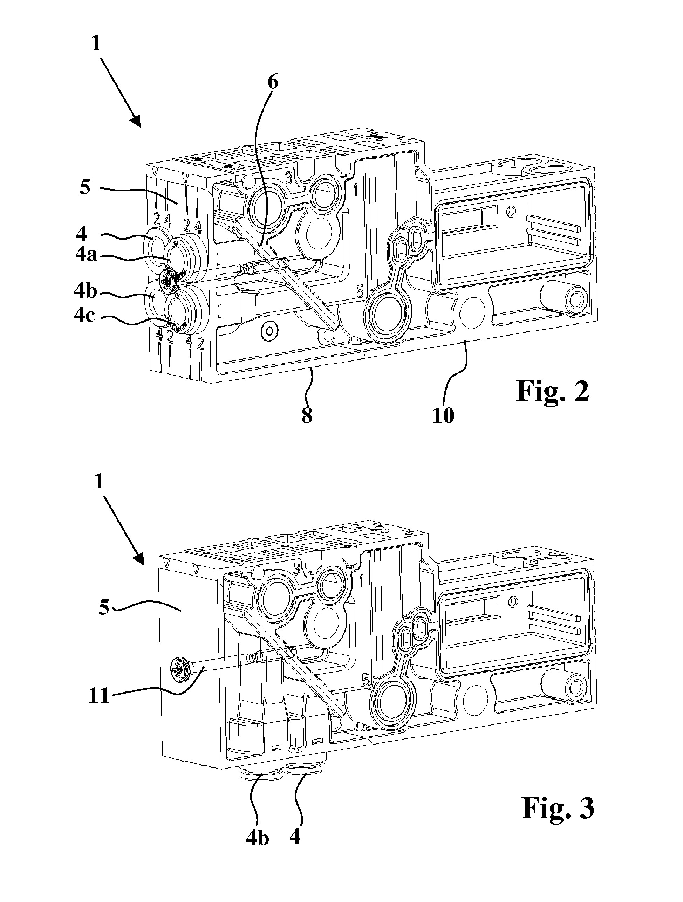

In Fig. 2 ist eine Ventilanschlussplatte 1 mit einem fest montierten Anschlusselement 5 gezeigt. Die Montagerichtung des Anschlusselements 5 ist derart gewählt, dass die Arbeitsanschlüsse 4, 4a, 4b, 4c innerhalb der ersten Seitenfläche 7 seitlich aus der Ventilanschlussplatte 1 herausgeführt sind. Damit geht die Bodenfläche 10 eben in die zweite Seitenfläche 8 des Anschlusselements 5 über, so dass beispielsweise eine plane Montage der Ventilanschlussplatte bzw. des aus einer Vielzahl von Ventilanschlussplatten 1 gebildeten Ventilgrundkörpers auf einer Unterseite montierbar ist. Gemäß der vorliegenden Ausführung weist die Ventilanschlussplatte 1 vier Arbeitsanschlüsse 4, 4a, 4b, 4c auf, wobei je zwei Arbeitsanschlüsse 4, 4b einem ersten Ventil zugeordnet sind und zwei weitere Arbeitsanschlüsse 4a, 4c einem zweiten Ventil zugeordnet sind. Die Arbeitskanäle 4, 4a, 4b, 4c, welche innerhalb der Trennebene 6 von der Ventilanschlussplatte 1 in das Anschlusselement 5 übergehen, sind derart symmetrisch innerhalb der Trennebene 6 aufgeteilt, dass sowohl eine Montage in einer ersten Position des Anschlusselements 5 als auch bei einer Montage in seiner zweiten Position des Arbeitsanschlusses 5, welches 180° versetzt ist, mit den Arbeitsanschlüssen 4, 4a, 4b, 4c innerhalb der Ventilanschlussplatte 1 fluchten.

In Fig. 3 ist eine Ventilanschlussplatte 1 mit einem Anschlusselement 5 gezeigt, welches in einer Position montiert ist, in der die Arbeitsanschlüsse 4 bodenseitig aus der Ventilanschlussplatte 1 herausgeführt sind. Die Montage des Anschlusselements 5 erfolgt - wie auch in Fig. 2- mittels einer Zentralschraube 11, welche in der ersten Seitenfläche 7 (Fig. 2) als auch in der zweiten Seitenfläche 8 (Fig. 3) angeordnet sein kann. Die Zentralschraube 11 ist dabei in ein Gewinde oder in eine Bohrung, die für eine Gewindeformendenschraube ausgelegt wurde, eingeschraubt, welches/welche sich in der Ventilanschlussplatte 1 befindet, wohingegen der Schaft der Zentralschraube 11 durch das Anschlusselement 5 hindurchgeführt ist.

Die Erfindung beschränkt sich in ihrer Ausführung nicht aus das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- 1: Ventilanschlussplatte
- 2: Ventilaufsatzfläche
- 3: Versorgungsöffnung
- 4: Arbeitsanschluss
- 5: Anschlusselement
- 6: Trennebene
- 7: erste Seitenfläche
- 8: zweite Seitenfläche
- 9: Zylinderstift
- 10: Bodenfläche
- 11: Zentralschraube
- 12: Dichtelement

## Patentansprüche

1. Ventilanschlussplatte (1) zur Aufnahme zumindest eines Ventils zum Schalten eines Druckmittelflusses, insbesondere eines elektropneumatischen Mehrwegeventils über eine Ventilaufsatzfläche (2), welche zur mehrfachen planparallelen Anordnung zueinander ausgebildet ist und fluidische und /oder elektrische Versorgungsöffnungen (3) aufweist, welche bei einer parallel benachbarten Anordnung durchgehende Kanäle bilden, wobei weiterhin Arbeitsanschlüsse (4, 4a, 4b, 4c) zur Ansteuerung von fluidischen Verbrauchern vorgesehen sind,
**dadurch gekennzeichnet, dass** die Ventilanschlussplatte (1) ein Anschlusselement (5) umfasst, in dem die Arbeitsanschlüsse (4, 4a, 4b, 4c) ausgebildet sind, und das Anschlusselement (5) an der Ventilanschlussplatte (1) in zumindest zwei Positionen montierbar ist, um sowohl eine bodenseitige Anschlussrichtung als auch eine seitliche Anschlussrichtung der Arbeitsanschlüsse (4, 4a, 4b, 4c) zu ermöglichen.

2. Ventilanschlussplatte (1) nach Anspruch 1,
**dadurch gekennzeichnet, dass** das Anschlusselement (5) eine gleichseitige Dreiecksform aufweist und die Trennebene (6) zwischen der Ventilanschlussplatte (1) und dem Anschlusselement (5) bezogen auf die Ventilaufsatzfläche (2) einen Winkel von etwa 45° einnimmt.

3. Ventilanschlussplatte (1) nach Anspruch 1 oder 2,
**dadurch gekennzeichnet, dass** über die Ventilaufsatzfläche (2) zwei Ventile mit je zwei Arbeitsanschlüssen (4, 4a, 4b, 4c) aufnehmbar sind, sodass das Anschlusselement (5) vier Arbeitsanschlüsse (4, 4a, 4b, 4c) aufweist.

4. Ventilanschlussplatte (1) nach Anspruch 3,
**dadurch gekennzeichnet, dass** die vier Arbeitsanschlüsse (4, 4a, 4b, 4c) innerhalb der ersten oder der zweiten Seitenfläche (7,8) des Anschlusselements (5) angeordnet sind.

5. Ventilanschlussplatte (1) nach Anspruch 3,
**dadurch gekennzeichnet, dass** je ein Arbeitskanal des ersten und des zweiten auf der Ventilaufsatzfläche (2) aufgesetzten Ventils innerhalb der Ventilanschlussplatte (1) oder innerhalb des Anschlusselements (5) fluidisch zusammengeführt sind, sodass das Anschlusselement (5) insgesamt zwei Arbeitsanschlüsse (4, 4a, 4b, 4c) umfasst.

6. Ventilanschlussplatte (1) nach einem der vorgenannten Ansprüche,
**dadurch gekennzeichnet, dass** das Anschlusselement (5) mittels zumindest eines zentralen Befestigungselementes, insbesondere mittels einer Zentralschraube (11), an der Ventilanschlussplatte (1) montierbar ist.

7. Ventilanschlussplatte (1) nach einem der vorgenannten Ansprüche,
**dadurch gekennzeichnet, dass** das Anschlusselement (5) mit der Ventilanschlussplatte (1) mittels Zylinderstiften (9) verstiftet ist.

8. Ventilanschlussplatte (1) nach einem der vorgenannten Ansprüche,
**dadurch gekennzeichnet, dass** die geometrische Abmessung der ersten und zweiten Seitenfläche (7,8) des Anschlusselements (5) derart ausgebildet ist, dass die Außenkontur der Ventilanschlussplatte (1) in die Seitenflächen (7,8) des Anschlusselements (5) eben übergeht.

9. Ventilanschlussplatte (1) nach einem der vorgenannten Ansprüche,
**dadurch gekennzeichnet, dass** zur fluidischen Dichtung der Trennebene (6) zwischen der Ventilanschlussplatte (1) und dem Anschlusselement (5) zumindest ein Dichtelement (12) angeordnet ist.

10. Ventilanschlussplatte (1) nach einem der vorgenannten Ansprüche,
**dadurch gekennzeichnet, dass** die Ventilanschlussplatte (1) und /oder das Anschlusselement (5) aus einem Kunststoff oder Aluminium und mittels eines Spritzgussverfahrens bzw. Druckgussverfahrens hergestellt ist.
